(19) Europäisches Patentamt
European Patent Office
Office européen des brevets

(11)  **EP 3 614 347 B1**

(12)  **EUROPEAN PATENT SPECIFICATION**

(45) Date of publication and mention
of the grant of the patent:
**08.05.2024  Bulletin 2024/19**

(21) Application number: **18189850.3**

(22) Date of filing: **21.08.2018**

(51) International Patent Classification (IPC):
**G07C 9/00** *(2020.01)*     **B60R 25/20** *(2013.01)*
**H04L 9/32** *(2006.01)*     **H04W 12/06** *(2021.01)*

(52) Cooperative Patent Classification (CPC):
**G07C 9/00309; H04L 9/3271; H04W 4/40;**
**H04W 12/069; H04W 12/08;** B60R 25/20;
G07C 2009/00388; G07C 2209/08; H04L 2209/80;
H04L 2209/84

(54) **MOBILE PHONE AS A CAR KEY**

MOBILTELEFON ALS EIN AUTOSCHLÜSSEL

TÉLÉPHONE MOBILE UTILISÉ EN TANT QUE CLÉ DE VOITURE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**26.02.2020  Bulletin 2020/09**

(73) Proprietor: **Polestar Performance AB**
**405 31 Gothenburg (SE)**

(72) Inventor: **Fogelklou, Christopher**
**41871 GÖTEBORG (SE)**

(74) Representative: **Zacco Sweden AB**
**P.O. Box 5581**
**Löjtnantsgatan 21**
**114 85 Stockholm (SE)**

(56) References cited:
**EP-A1- 3 321 892**      **WO-A1-99/40546**
**WO-A1-2008/044093**    **US-A1- 2009 217 043**
**US-A1- 2016 036 788**  **US-A1- 2017 349 143**

## Description

## TECHNICAL FIELD

The invention relates to methods of enabling access to a vehicle using a wireless communication device as a key, and devices performing the methods.

## BACKGROUND

In the automotive industry, recent developments have been directed towards using a mobile phone as a car key. That is, the phone will be programmed with authentication data to be exchanged with an access system of the car making it possible for a user to access her car, i.e. have the car unlock as the user approaches the car, and then use the phone to start the car, unlock its trunk, perform adjustments to car settings, etc. without actually requiring a traditionally used physical key.

EP3321892A1 relates to a physical key for provisioning a communication device with data allowing said communication device to access a vehicle resource by operating remotely a vehicle lock system in which a first cryptographic key called master key is stored.

US2017/349143A1 relates to an electronics unit intended to be fitted in a vehicle and designed to control a functionality of the vehicle upon receiving a request from a user terminal, comprising a storage unit designed to store a counter and an item of data representing a duration; means for periodically modifying the value of the counter, with a period equal to said duration; control means for controlling said functionality only when the counter is within a given range of values.

US2016/036788A1 relates to methods and devices for wireless key management for authentication. Specifically, disclosing a method of authentication and an electronic locking device having an electronically controllable locking mechanism.

A problem with using a mobile phone as a car key is that it is difficult to find a reasonable trade-off between level of security of the access system and complexity of the authentication method used to give the user access to the car.

For instance, the commonly used Transport Layer Security (TLS) protocol requires bidirectional handshaking, where both the phone and the car must contribute a part of a piece of data such as a random number for undergoing an authentication process.

## SUMMARY

An object of the invention is to solve, or at least mitigate, this problem in the art and thus to provide an improved method of enabling access to a vehicle using a wireless communication device as a key.

This object is attained in a first aspect of the invention by a method performed by a vehicle of enabling access to the vehicle using a wireless communication device as a key. The method comprises advertising, by repeatedly transmitting, a random number required to access the vehicle, thereafter receiving, from the wireless communication device approaching the vehicle, a request to access the vehicle, the request comprising authentication data, a signature of the wireless communication device, and booking data required to access the vehicle, determining if the received authentication data matches the advertised random number, and if so verifying correctness of the signature of the wireless communication device, and if so determining if the booking data is valid, and if so allowing access to the vehicle, wherein a new random number is advertised after a currently advertised random number is received from the wireless communication device.

This object is attained in a second aspect of the invention by a vehicle configured to enable a user to access the vehicle using a wireless communication device as a key. The vehicle comprises a processing unit operative to cause the vehicle to advertise, by repeatedly transmitting, a random number required to access the vehicle, thereafter receive, from the wireless communication device approaching the vehicle, a request to access the vehicle, the request comprising authentication data, a signature of the wireless communication device, and booking data required to access the vehicle, determine if the received authentication data matches the advertised random number, and if so verify correctness of the signature of the wireless communication device, and if so determine if the booking data is valid, and if so allow the user access to the vehicle, wherein a new random number is advertised after a currently advertised random number is received from the wireless communication device.

Hence, the user will via her wireless communication device (e.g. a phone) obtain, from a party providing access to a vehicle (e.g. a car), booking data required to attain access to the car. The party providing the access is for instance a car pool provider.

When the user approaches the car, the car will receive a random number being advertised by the car, which is required to unlock the car, e.g. via Bluetooth Low Energy (BLE). The random number is commonly referred to as a *nonce,* i.e. an arbitrary number that can be used just once.

Thereafter, the phone sends a request to access the car, which request comprises authentication data for accessing the car, a signature provided by the phone, and the booking data.

Upon receiving the access request, the car determines if the received authentication data matches the advertised nonce. If so, the car will proceed to verify correctness of the signature included in the access request.

If the provided signature is verified to be correct, the car is ensured that the access request originates from a trusted source (i.e. the phone), and the car will determine whether the booking data is valid or not, in which case the user is given access to the car, i.e. the locked car is unlocked.

This vehicle-unlocking process has a number of advantages.

Firstly, if a nonce is used as a means require to access the vehicle, security is enhanced, since the nonce is for one-time use and thus cannot be reused or replayed; the current nonce must be presented by the phone to the car. Each time a currently advertised nonce is used to access the car, the car will advertise a new nonce.

Secondly, a signature is provided by the phone thereby ensuring the car that the access request originates from a trusted source.

As a result, the user will only be given access to the car, if the access request transmitted by the phone comprises the nonce and the signature is correct (and the booking data is valid). If not, the car will discontinue its communication with the phone resulting in no information leakage to a potentially malicious third party.

In an embodiment, the booking data further comprising a signature of a party issuing the booking data, wherein the determining if the booking data is valid at the car further comprises verifying correctness of the signature of the party issuing the booking data,

In a further embodiment, the booking data is further configured to comprise a public key of the wireless communication device and/or a public key of the vehicle.

Further embodiments of the invention will be discussed in the following.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

The invention is now described, by way of example, with reference to the accompanying drawings, in which:

> Figure 1 shows an infrastructure enabling the use of a wireless communication device as a car key;
> Figure 2 shows a signalling diagram illustrating a method of accessing a vehicle in the form of the car using a mobile phone as a key according to an embodiment;
> Figure 3 shows a flowchart illustrating the method described with the signalling diagram of Figure 2, seen from the perspective of the car to be accessed;
> Figure 4 shows a vehicle according to an embodiment; and
> Figure 5 shows a wireless communication device according to an unclaimed example.

## DETAILED DESCRIPTION

The invention will now be described more fully hereinafter with reference to the accompanying drawings, in which certain embodiments of the invention are shown. Like numbers refer to like elements throughout the description.

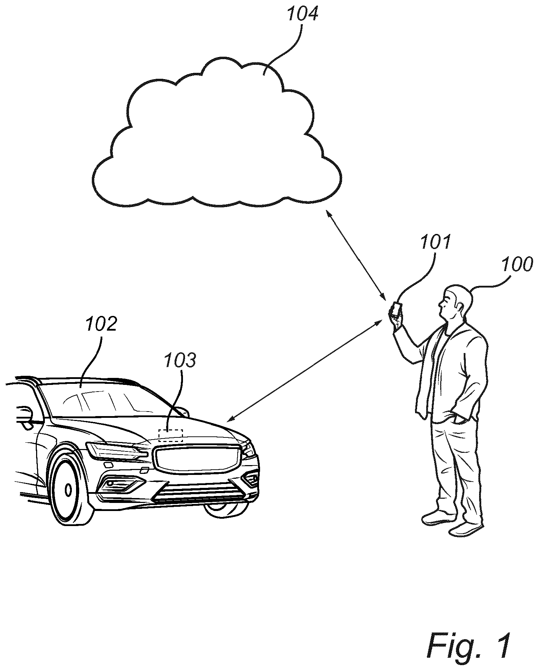

Figure 1 illustrates a user 100 approaching a car 101. The user 100 holds a wireless communication device (WCD, 102), in this case a mobile phone. Alternatively, the wireless communication device 102 may be embodied by a tablet, a smart watch, a laptop, etc.

The car 101 is typically equipped with an Electronic Control Unit (ECU, 103), which may be implemented by one or more microprocessors executing appropriate software for controlling various systems and components in the vehicle. A car may contain a great number of interconnected ECUs for controlling all properties of the car such as a brake control module (BCM) or a speed control module (SCM).

When using the phone 102 as a means for accessing the car, the ECU 103 is typically the device responsible for authenticating the user 102 and thus giving the user 100 access to the car 101 by unlocking the car.

Now, the phone 102 may communicate with the ECU 103 using any appropriate near-field communication (NFC) technology such as radiofrequency identification (RFID) or Bluetooth Low Energy (BLE). In the following exemplifying embodiments, the communication between the phone 102 and the ECU 103 will be performed using BLE.

In order for the user 100 to be able to access the car 102, theuser 100 is required to have access to valid booking data.

Assuming for instance that the user 100 rents the car 102 from a car rental firm, or is member of a car pool and wishes to access the car during a given time period, the user 100 will obtain the booking data from the party providing access to the car 102, i.e. the car rental firm or the car pool provider.

In its simplest form, the booking data may indicate an identifier of the renter of the car 102 and the time period for which the rental is valid:

booking = [Alan Smith; Pick-up: 1 May 2018, 13:00; Drop-off: 3 May 2018, 13:00].

The user 100 may e.g. be provided with the booking data via an online reservation service of the car rental firm or by making a car pool reservation via an App in her phone, thus connecting via the Internet to a cloud service 104 provided by the party giving the user access to the car 102.

It may also be envisaged that the concept of booking data is utilized for a permanently owned car. For instance, each of the members of a family owning a car may, using their respective phone, log onto an App provided by the car manufacturer to have their individual booking data issued:

$$booking1 = [\text{Alan Smith; permanent}],$$

$$booking2 = [\text{Jane Smith; permanent}];$$

and

$$booking3 = [\text{Julie Smith; permanent}].$$

Hence, the three family members Alan, Jane and June will have permanently valid booking data (until being nullified) downloaded on their phones for accessing the family car.

In the following, the exemplifying scenario where the user 100 books the car 102 via an App on her phone 101 will be used.

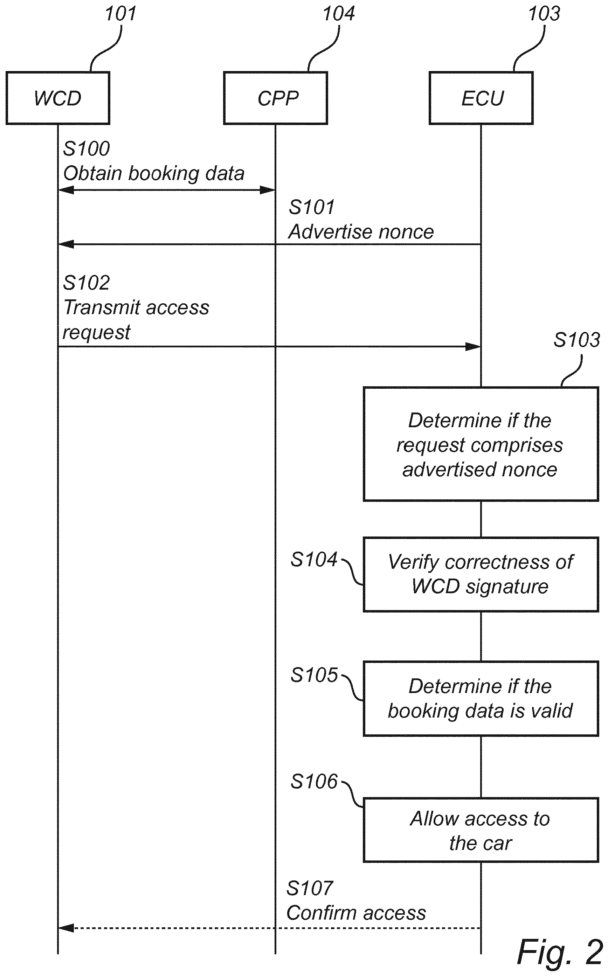

Figure 2 shows a signalling diagram illustrating a method of accessing a vehicle, in the form of the car 102, using a mobile phone 101 according to an embodiment. It is noted that the method may be used for any appropriate vehicle, such as a bus, a truck, a motorcycle, or even a bike being equipped with some form of processing unit, etc.

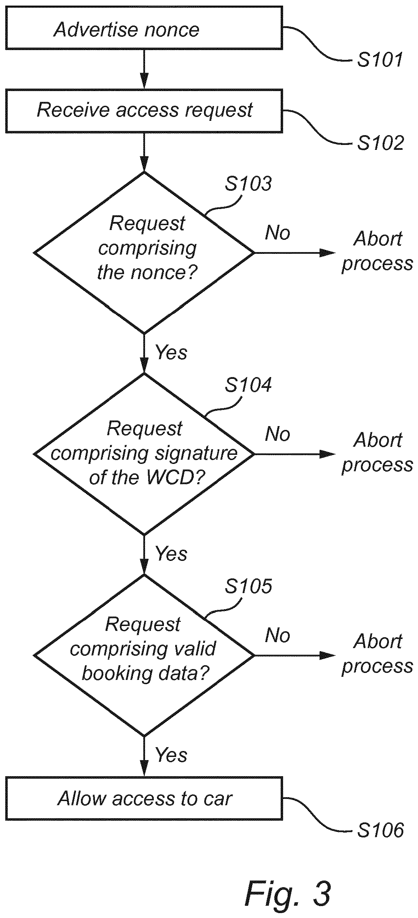

Figure 3 shows a flowchart illustrating the method described with the signalling diagram of Figure 2, seen from the perspective of the ECU 103 arranged in the car 102 to be accessed.

Hence, in a first step S100, the user 100 will via her phone 101 (denoted WCD in Figure 2), obtain, from a party providing access to the car 102, booking data required to attain access to the car 102. The party providing the access is in this exemplifying embodiment a car pool provider (CPP, 104).

The ECU 103 will advertise (i.e. repeatedly transmit) a unique identifier required to unlock the vehicle, which unique identifier the phone 101 will receive when the user 100 approaches the car 102, For instance, the identifier may be embodied by a random number commonly referred to as a *nonce,* i.e. an arbitrary number that can be used just once. Hence, a new nonce is advertised each time the currently advertised nonce is used by a WCD to access the car 102. Advantageously, the use of a nonce ensures that replay attacks are not possible.

Hence, the ECU 103 repeatedly *advertises* - i.e. broadcasts - a nonce and any phone within BLE range of the car 102 will be able to pick up the advertised nonce. The ECU 103 may for instance transmit a nonce every second using BLE. In this particular example, the ECU 103 advertises, say "67234", to the phone 101 in step S101.

In an optional embodiment, the phone 101 may record the instant of time at which it was received with a resolution of e.g. one second, say at 13:42:12.

In step S102, the phone 101 sends a request to the ECU 103 to access the car 102, which request comprises authentication data ("67234") for accessing the car 102, a signature provided by the phone 101, and the booking data.

The phone 101 may for instance use its private key to provide the authentication data with a digital signature, in which case the ECU 103 will use the corresponding public key of the phone 101 to subsequently verify the digital signature. The public key may e.g. be provided to the ECU 103 upon a user registering the phone 101 with the booking service, or may be included in the booking data. Alternatively, the phone 101 may encrypt the authentication data with a secret symmetric key shared with the ECU 103. In any case, the ECU 103 is ensured that the access request originates from a trusted WCD.

In case a time stamp ("13:42:12") is recorded by the phone 101, the time stamp is provided with the access request, such that correctness of the time stamp can be verified by the ECU 103,

Upon receiving the request to access the car 102, the ECU 103 determines in step S103 if the received authentication data ("67234") matches the nonce previously transmitted to the phone 101 in step S101, which it indeed does in this example, and the ECU 103 will proceed to verifying correctness in step S104 of the signature included in the access request, for instance by means of using the public key of the phone corresponding to the private key of the phone 101 utilized to provide the signature. A next advertisement from the ECU 103 will comprise a new nonce. Hence, a new nonce (e.g. "48931") is advertised by the ECU 103 after a currently advertised nonce has been used by a WCD when trying to access the car 102. That is, when the ECU 103 has received the nonce from the phone 101 and attempted a match, a new nonce will be advertised. This has as an advantageous effect that the currently advertised nonce used to access the car cannot be replayed. It is noted that a new nonce will be advertise even if the matching is not successful (thereby not giving the user access to the car).

If the provided signature is verified to be correct, the ECU 103 is ensured that the access request originates from a trusted WCD, and thus advantageously that the access request is provided with authenticity.

As can be concluded from the flowchart of Figure 3, if the phone 101 cannot present the nonce being advertised by the ECU 103 in step S101, the unlocking process is aborted. Further, if the correctness of the signature cannot be verified, the unlocking process is aborted.

However, since the received authentication data ("67234") in this particular example matches the nonce advertised by the ECU 103 and the signature provided by the phone 101 is verified to be correct, the ECU 103 proceeds to step S105 and determines if the booking data is valid.

In a basic embodiment, the ECU 103 verifies that the booking data has a predetermined format, for instance an 8-bit data field where all bits are set to "1", in which case the booking data is considered valid. If not, the unlocking process is aborted. It is noted that steps S103, S104 and S105 may be performed in a reverse order.

In an embodiment providing a higher level of security, the ECU 103 will acquire the booking data, either by submitting a request to the car pool provider 104 inquiring whether the received booking data [Alan Smith; Pickup: 1 May 2018, 13:00; Drop-off: 3 May 2018, 13:00] is valid, or by comparing the received booking data to booking data fetched from a local storage in the ECU 103 to which the booking data previously has been transmitted from the car pool provider 104.

Finally, in step S106, since all of the verifying steps S103-S105 are successful, the user 100 is given access to the car 102, and the locked car 102 is unlocked.

Optionally, with reference to step S107 of Figure 2, the ECU 103 transmits a confirmation message displayed on the screen of the phone 101 informing the user 100 that the car 102 is unlocked.

The vehicle-unlocking process illustrated with reference to Figures 2 and 3 has a number of advantages.

Firstly, if a nonce provided by the ECU 103 is used as a means required to access the car 102, security is enhanced, since the nonce is for one-time use and thus cannot be reused or replayed; the currently advertised nonce must be presented by the phone 101 to the ECU 103. Each time a new vehicle-unlocking process commences, a new nonce is transmitted by the ECU 103.

Secondly, a signature is provided by the phone 101 thereby ensuring the ECU 103 that the access request originates from a trusted WCD.

As a result, the ECU 103 will only allow access to the car 102, and possibly send a confirmation to the phone 101 accordingly to notify the user 100, if the access request transmitted by the phone comprises the nonce and the signature is correct (and of course that the booking data is valid). If not, the ECU 103 will discontinue its communication with the phone 101 resulting in no information leakage to a potentially malicious third party.

With the invention, in contrast to e.g. the TLS protocol, the phone 101 can just passively receive access credentials in the form of the nonce from the ECU 103 via BLE, and the ECU 103 will only send data back to the phone 101 in case of successful verification, otherwise the ECU 103 will disconnect, whereas in the TLS protocol some bidirectional handshaking would be required even if the phone 101 is not given access to the car 102.

In yet an embodiment, the car pool provider 104 signs the booking data with a private key when issuing the booking data to the user 100, and the ECU 103 uses a corresponding public key of the car pool provider 104 to verify the signature. The public key may be transmitted with the booking data, or the car 102 may be configured with the public key upon being incorporated in the car pool. As previously mentioned, the (signed) booking data may further comprise the public key of the phone 101, and even the public key of the car 102.

In such an embodiment the ECU 103 will in step S105 not only determine whether the booking data is valid or not, but also verify correctness of the signature provided by the issuer of the booking data (i.e. the car pool provider 104). If the verification of the signature provided by the car pool provider 104 fails, the process will be aborted.

This is advantageous, since it is ensured that the booking data originates from a trusted source. It is further advantageous since the public key of the phone 101 and possible also the public key of the car 102 may be included in the booking data, and the phone 101 and the ECU 103 may thus implicitly trust the public keys comprised in the booking since the booking data is signed by a trusted source (i.e. the car pool provider 104).

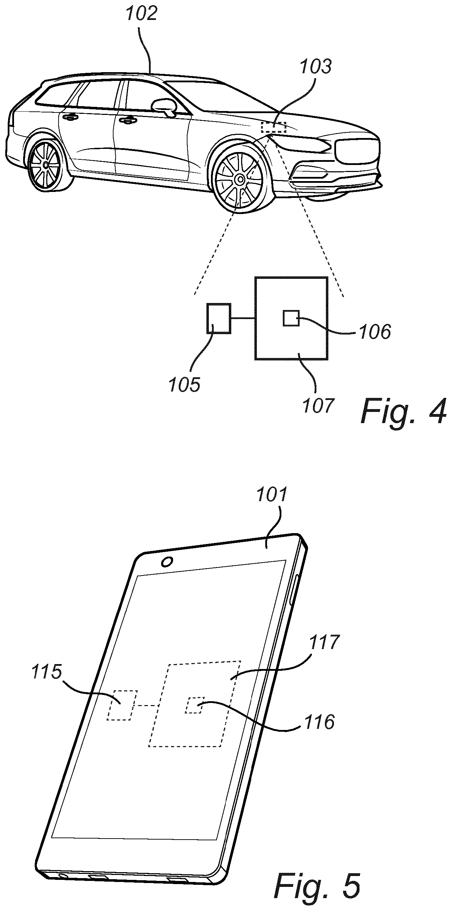

Figure 4 illustrates a vehicle 102 in the form of a car. The steps of the method performed by the car 102 for enabling a user to access the car 102 using a wireless communication device as a key according to embodiments are in practice performed by an ECU 103 as previously has been described. The ECU 103 includes a processing unit 105 embodied in the form of one or more microprocessors arranged to execute a computer program 106 downloaded to a suitable storage volatile medium 107 associated with the microprocessor, such as a Random Access Memory (RAM), or a non-volatile storage medium such as a Flash memory or a hard disk drive. The processing unit 105 is arranged to cause the car 102 to carry out the method according to embodiments when the appropriate computer program 106 comprising computer-executable instructions is downloaded to the storage medium 107 and executed by the processing unit 105. The storage medium 107 may also be a computer program product comprising the computer program 106.

Alternatively, the computer program 106 may be transferred to the storage medium 107 by means of a suitable computer program product, such as a Digital Versatile Disc (DVD) or a memory stick. As a further alternative, the computer program 106 may be downloaded to the storage medium 107 over a network. The processing unit 105 may alternatively be embodied in the form of a digital signal processor (DSP), an application specific integrated circuit (ASIC), a field-programmable gate array (FPGA), a complex programmable logic device (CPLD), etc., causing the car 102 to perform the method of embodiments of the invention.

Figure 5 illustrates a wireless communication device 101 in the form of a phone. The steps of the method performed by the phone 101 for enabling a user to access a car 102 using the phone 101 as a key according to unclaimed examples are in practice performed by a processing unit 115 embodied in the form of one or more microprocessors arranged to execute a computer program 116 downloaded to a suitable storage volatile medium 117 associated with the microprocessor, such as a RAM, or a non-volatile storage medium such as a Flash memory or a hard disk drive. The processing unit 105 is arranged to cause the phone 101 to carry out the method according to embodiments when the appropriate computer program 116 comprising computer-executable instructions is downloaded to the storage medium 117 and executed by the processing unit 115. The storage medium 117 may also be a computer program product comprising the computer program 116. Alternatively, the computer program 116 may be transferred to the storage medium 117 by means of a suitable computer program product, such as a DVD or a memory stick. As a further lternative, the computer program 116 may be downloaded to the storage medium 117 over a network. The processing unit 115 may alternatively be embodied in the form of a DSP, an ASIC, an FPGA, a CPLD, etc., causing the phone 101 to perform the method of an example.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1. A method performed by a vehicle (102) of enabling access to the vehicle (102) using a wireless communication device (101) as a key, the method comprising:

   advertising (S101), by repeatedly transmitting, a random number required to access the vehicle (102);
   thereafter receiving (S102), from the wireless communication device (101) approaching the vehicle (102), a request to access the vehicle (102), the request comprising authentication data, a signature of the wireless communication device (101), and booking data required to access the vehicle (102) ;
   determining (S103) if the received authentication data matches the advertised random number; and if so
   verifying (5104) correctness of the signature of the wireless communication device (101); and if so
   determining (S105) if the booking data is valid; and if so allowing (5106) access to the vehicle (102),

   wherein a new random number is advertised after a currently advertised random number is received from the wireless communication device (101).

2. The method of claim 1, the booking data further comprising a signature of a party (104) issuing the booking data, wherein the determining (S105) if the booking data is valid further comprises:
   verifying correctness of the signature of the party (104) issuing the booking data,

3. The method of any one of the preceding claims, the booking data further comprising a public key of the wireless communication device (101) and/or a public key of the vehicle (102).

4. The method of any one of the preceding claims, the advertising of a random number being performed using Bluetooth Low Energy, BLE

5. A vehicle (102) configured to enable a user (100) to access the vehicle (102) using a wireless communication device (101) as a key, the vehicle (102) comprising a processing unit (105) operative to cause the vehicle (102) to:

   advertise, by repeatedly transmitting, a random number required to access the vehicle (102);
   thereafter receive, from the wireless communication device (101) approaching the vehicle (102), a request to access the vehicle (102), the request comprising authentication data, a signature of the wireless communication device (101), and booking data required to access the vehicle (102);
   determine if the received authentication data matches the advertised random number; and if so
   verify correctness of the signature of the wireless communication device (101); and if so
   determine if the booking data is valid; and if so allow (S106) the user (100) access to the vehicle (102),

   wherein a new random number is advertised after a currently advertised random number is received from the wireless communication device (101).

6. The vehicle (102) of claim 5, the booking data further being configured to comprise a signature of a party (104) issuing the booking data, wherein the vehicle (102) further is operative to, when determining if the booking data is valid:
   verify correctness of the signature of the party (104) issuing the booking data.

7. The vehicle (102) of any one of claims 5 or 6, further being operative to advertise the random number being using Bluetooth Low Energy, BLE.

8. A computer program (106) comprising computer-executable instructions for causing a vehicle (102) to perform steps recited in any one of claims 1-4 when the computer-executable instructions are executed on a processing unit (105) included in the vehicle (102).

9. A computer program product comprising a computer readable medium (107), the computer readable medium having the computer program (106) according to claim 8 embodied thereon.

**Patentansprüche**

1. Verfahren, durchgeführt von einem Fahrzeug (102), zum Ermöglichen des Zugangs zum Fahrzeug (102) unter Verwendung einer drahtlosen Kommunikationsvorrichtung (101) als Schlüssel, wobei das Verfahren Folgendes umfasst:

    Bekanntgeben (S101), durch wiederholtes Übertragen, einer Zufallszahl, die für den Zugang zum Fahrzeug (102) erforderlich ist; anschließend Empfangen (S102), von der drahtlosen Kommunikationsvorrichtung (101), die sich dem Fahrzeug (102) nähert, einer Anfrage für den Zugang zum Fahrzeug (102), wobei die Anfrage Authentifizierungsdaten, eine Signatur der drahtlosen Kommunikationsvorrichtung (101) und Buchungsdaten umfasst, die erforderlich sind, um Zugang zum Fahrzeug (102) zu erhalten; Bestimmen (S103), ob die empfangenen Authentifizierungsdaten mit der bekanntgegebenen Zufallszahl übereinstimmen; und wenn Ja, Überprüfen (S104) der Richtigkeit der Signatur der drahtlosen Kommunikationsvorrichtung (101); und wenn Ja, Bestimmen (S105), ob die Buchungsdaten gültig sind; und wenn Ja, Ermöglichen (S106) des Zugangs zum Fahrzeug (102), wobei eine neue Zufallszahl bekanntgegeben wird, nachdem eine aktuell bekanntgegebene Zufallszahl von der drahtlosen Kommunikationsvorrichtung (101) empfangen wird.

2. Verfahren nach Anspruch 1, wobei die Buchungsdaten ferner eine Unterschrift einer Partei (104) umfassen, die die Buchungsdaten ausgibt, wobei das Bestimmen (S105), ob die Buchungsdaten gültig sind, ferner Folgendes umfasst: Überprüfen der Richtigkeit der Unterschrift der Partei (104), die die Buchungsdaten ausgibt.

3. Verfahren nach einem der vorhergehenden Ansprüche, wobei die Buchungsdaten ferner einen öffentlichen Schlüssel der drahtlosen Kommunikationsvorrichtung (101) und/oder einen öffentlichen Schlüssel des Fahrzeugs (102) umfassen.

4. Verfahren nach einem der vorhergehenden Ansprüche, wobei das Bekanntgeben einer Zufallszahl unter Verwendung von Bluetooth Low Energy, BLE, erfolgt.

5. Fahrzeug (102), das dazu konfiguriert ist, einem Benutzer (100) den Zugang zum Fahrzeug (102) unter Verwendung einer drahtlosen Kommunikationsvorrichtung (101) als Schlüssel zu ermöglichen, wobei das Fahrzeug (102) eine Verarbeitungseinheit (105) umfasst, die dazu dient, das Fahrzeug (102) zu Folgendem zu veranlassen:

    Bekanntgeben, durch wiederholtes Übertragen, einer Zufallszahl, die für den Zugang zum Fahrzeug (102) erforderlich ist; anschließend Empfangen, von der drahtlosen Kommunikationsvorrichtung (101), die sich dem Fahrzeug (102) nähert, einer Anfrage für den Zugang zum Fahrzeug (102), wobei die Anfrage Authentifizierungsdaten, eine Signatur der drahtlosen Kommunikationsvorrichtung (101) und Buchungsdaten umfasst, die erforderlich sind, um Zugang zum Fahrzeug (102) zu erhalten; Bestimmen, ob die empfangenen Authentifizierungsdaten mit der bekanntgegebenen Zufallszahl übereinstimmen; und wenn Ja, Überprüfen der Richtigkeit der Signatur der drahtlosen Kommunikationsvorrichtung (101); und wenn Ja, Bestimmen, ob die Buchungsdaten gültig sind; und wenn Ja, Ermöglichen (S106), für den Benutzer (100), des Zugangs zum Fahrzeug (102), wobei eine neue Zufallszahl bekanntgegeben wird, nachdem eine aktuell bekanntgegebene Zufallszahl von der drahtlosen Kommunikationsvorrichtung (101) empfangen wird.

6. Fahrzeug (102) nach Anspruch 5, wobei die Buchungsdaten ferner dazu konfiguriert sind, eine Unterschrift einer Partei (104) zu umfassen, die die Buchungsdaten ausgibt, wobei das Fahrzeug (102) beim Bestimmen, ob die Buchungsdaten gültig sind, ferner zu Folgendem dient: Überprüfen der Richtigkeit der Unterschrift der Partei (104), die die Buchungsdaten ausgibt.

7. Fahrzeug (102) nach einem der Ansprüche 5 oder 6, das ferner dazu dient, die Zufallszahl unter Verwendung von Bluetooth Low Energy, BLE, bekanntzugeben.

8. Computerprogramm (106), umfassend computerausführbare Anweisungen, um ein Fahrzeug (102) zu veranlassen, Schritte durchzuführen, die in einem der Ansprüche 1-4 genannt sind, wenn die computerausführbaren Anweisungen auf einer Verarbeitungseinheit (105), die im Fahrzeug (102) enthalten ist, ausgeführt werden.

9. Computerprogrammprodukt, umfassend ein computerlesbares Medium (107), wobei auf dem computerlesbaren Medium das Computerprogramm (106) nach Anspruch 8 integriert ist.

**Revendications**

1. Procédé exécuté par un véhicule (102) pour permettre l'accès au véhicule (102) en utilisant un dispositif de communication sans fil (101) comme clé, le procédé comprenant :

l'annonce (S101), par transmission répétée, d'un nombre aléatoire requis pour accéder au véhicule (102) ;
la réception (S102), par la suite, du dispositif de communication sans fil (101) s'approchant du véhicule (102), d'une demande d'accès au véhicule (102), la demande comprenant des données d'authentification, une signature du dispositif de communication sans fil (101), et des données de réservation requises pour accéder au véhicule (102) ;
le fait de déterminer (S103) si les données d'authentification reçues correspondent au nombre aléatoire annoncé ; et si c'est le cas
la vérification (S104) de l'exactitude de la signature du dispositif de communication sans fil (101) ; et si c'est le cas
le fait de déterminer (S105) si les données de réservation sont valides ; et si c'est le cas, l'autorisation (S106) d'accès au véhicule (102),
dans lequel un nouveau nombre aléatoire est annoncé après qu'un nombre aléatoire actuellement annoncé ait été reçu du dispositif de communication sans fil (101).

2. Procédé selon la revendication 1, les données de réservation comprenant en outre une signature d'une entité (104) émettant les données de réservation, dans lequel le fait de déterminer (S105) si les données de réservation sont valides comprend en outre :
la vérification de l'exactitude de la signature de l'entité (104) émettant les données de réservation.

3. Procédé selon l'une quelconque des revendications précédentes, les données de réservation comprenant en outre une clé publique du dispositif de communication sans fil (101) et/ou une clé publique du véhicule (102).

4. Procédé selon l'une quelconque des revendications précédentes, l'annonce d'un nombre aléatoire étant effectuée en utilisant le Bluetooth Low Energy, BLE.

5. Véhicule (102) configuré pour permettre à un utilisateur (100) d'accéder au véhicule (102) à l'aide d'un dispositif de communication sans fil (101) comme clé, le véhicule (102) comprenant une unité de traitement (105) opérationnelle pour amener le véhicule (102) à :

annoncer, par transmission répétée, un numéro aléatoire requis pour accéder au véhicule (102) ;
recevoir, par la suite, du dispositif de communication sans fil (101) s'approchant du véhicule (102), une demande d'accès au véhicule (102), la demande comprenant des données d'authentification, une signature du dispositif de communication sans fil (101), et des données de réservation requises pour accéder au véhicule (102) ;
déterminer si les données d'authentification reçues correspondent au nombre aléatoire annoncé ; et si c'est le cas
vérifier l'exactitude de la signature du dispositif de communication sans fil (101) ; et si c'est le cas
déterminer si les données de réservation sont valides ; et si c'est le cas
permettre (S106) à l'utilisateur (100) l'accès au véhicule (102),
dans lequel un nouveau nombre aléatoire est annoncé après qu'un nombre aléatoire actuellement annoncé ait été reçu du dispositif de communication sans fil (101).

6. Véhicule (102) selon la revendication 5, les données de réservation étant en outre configurées pour comprendre une signature d'une entité (104) émettant les données de réservation, dans lequel le véhicule (102) est en outre opérationnel pour, lors de la détermination du fait que les données de réservation sont valides ou non :
vérifier l'exactitude de la signature de l'entité (104) émettant les données de réservation.

7. Véhicule (102) selon l'une quelconque des revendications 5 ou 6, étant en outre opérationnel pour annoncer le nombre aléatoire utilisant le Bluetooth Low Energy, BLE.

8. Programme informatique (106) comprenant des instructions exécutables par ordinateur pour amener un véhicule (102) à exécuter les étapes selon l'une quelconque des revendications 1 à 4 lorsque les instructions exécutables par ordinateur sont exécutées sur une unité de traitement (105) incluse dans le véhicule (102).

9. Produit de programme informatique comprenant un support lisible par ordinateur (107), le support lisible par ordinateur contenant le programme informatique (106) selon la revendication 8.

*Fig. 1*

Fig. 2

*Fig. 3*

**Fig. 4**

**Fig. 5**

**REFERENCES CITED IN THE DESCRIPTION**

**Patent documents cited in the description**

- EP 3321892 A1
- US 2017349143 A1
- US 2016036788 A1